Europäisches Patentamt

European Patent Office

Office européen des brevets

(11) Veröffentlichungsnummer: **0 065 772**
**A1**

## (12) EUROPÄISCHE PATENTANMELDUNG

(21) Anmeldenummer: **82104478.1**

(22) Anmeldetag: **21.05.82**

(51) Int. Cl.³: **G 06 F 9/32**

(30) Priorität: **25.05.81 DE 3120713**

(43) Veröffentlichungstag der Anmeldung:
**01.12.82 Patentblatt 82/48**

(84) Benannte Vertragsstaaten:
**FR GB IT NL SE**

(71) Anmelder: **SIEMENS AKTIENGESELLSCHAFT Berlin
und München
Postfach 22 02 61
D-8000 München 22(DE)**

(72) Erfinder: **Eckert, Alfred
Grünstrasse 32
D-8000 München 70(DE)**

(72) Erfinder: **Heilmeir, Ernst
Passauer Strasse 25
D-8000 München 70(DE)**

(72) Erfinder: **Hempen, Klaus
Saarlautenerstrasse 68
D-8000 München 50(DE)**

(54) Schaltungsanordnung für ein Prozessorsystem.

(57) Zur Verkürzung der Zugriffszeit in einem externen Programm und/oder Datenspeicher, wird diesem zur Adressierung ein externer Programmzähler vorgeschaltet.

FIG 2

EP 0 065 772 A1

0065772

SIEMENS AKTIENGESELLSCHAFT          Unser Zeichen
Berlin und München                  VPA  81 P 6752 E

## Schaltungsanordnung für ein Prozessorsystem

Die Erfindung betrifft eine Schaltungsanordnung für Prozessorsysteme gemäß dem Oberbegriff des Patentanspruches 1.

Im allgemeinen führen Prozessoren, die ein gemeinsames Adress- und Datensammelleitungssystem aufweisen, für das im folgenden der allgemein bekannte Ausdruck "Bus" verwendet wird, Instruktionen sequentiell aus. Das bedeutet, daß zunächst die Instruktionsadresse auf den Bus gegeben und in einem Adressregister abgespeichert wird. Dann wird die adressierte Instruktion mit einer zeitlichen Verzögerung je nach der Zugriffszeit des Programmspeichers, in den Prozessor eingelesen. Bei der anschließenden Ausführung dieser Instruktion im Prozessor werden über denselben Bus Datenadressen und die Daten selbst ein- bzw. ausgegeben. Damit ist eine nicht unerhebliche Auslastung des Busses mit Instruktionsadressen verbunden, die zu einer oftmals beträchtlichen zeitlichen Verlängerung der Abarbeitung von Programmabläufen führt.

Der Erfindung liegt die Aufgabe zugrunde, die Geschwindigkeit, mit der der Prozessor Programmabläufe abarbeitet, zu steigern. Im besonderen besteht die Aufgabe der Erfindung darin, die Zugriffszeit zum externen Programmspeicher zu reduzieren.

Dabei wird davon ausgegangen, daß in sehr vielen Fällen im Zuge eines Programmablaufes Instruktionen mit aufeinanderfolgenden Instruktionsadressen ausgeführt werden, d.h. daß nach Ausführung einer Instruktion mit der Instruktionsadresse n als nächste Instruktion die mit der Instruktionsadresse n+1 ausgeführt wird (sog. lineare Abarbeitung).

Kro 1 Obh / 15.5.1981

Diese Aufgabe wird durch die im kennzeichnenden Teil des Patentanspruchs 1 angegebenen Maßnahmen gelöst.

Ein Vorteil der Erfindung besteht darin, daß bei der Abarbeitung aufeinanderfolgender Instruktionen der Bus im wesentlichen nur für den Datentransfer benutzt wird. Weiterhin bietet die Verwendung des externen Programmzählers den Vorteil, die Zugriffszeit zum Instruktions- oder Programmspeicher in die Zeit der Abarbeitung einer vorhergehend adressierten Instruktion zu legen, d.h. wenn Daten im Rechenwerk des Prozessors bearbeitet werden, parallel dazu die nächste Instruktion in dem Programmspeicher bereits zu adressieren.

Im folgenden wird die Erfindung anhand eines in den Figuren dargestellten Ausführungsbeispieles näher beschrieben. Dabei zeigen:

Fig. 1 ein Blockschaltbild eines Prozessorsystems und einen externen Programmzähler und

Fig. 2 ein Blockschaltbild eines Prozessorsystems, einen externen Programmzähler, einen Decodierer und einen Multiplexer.

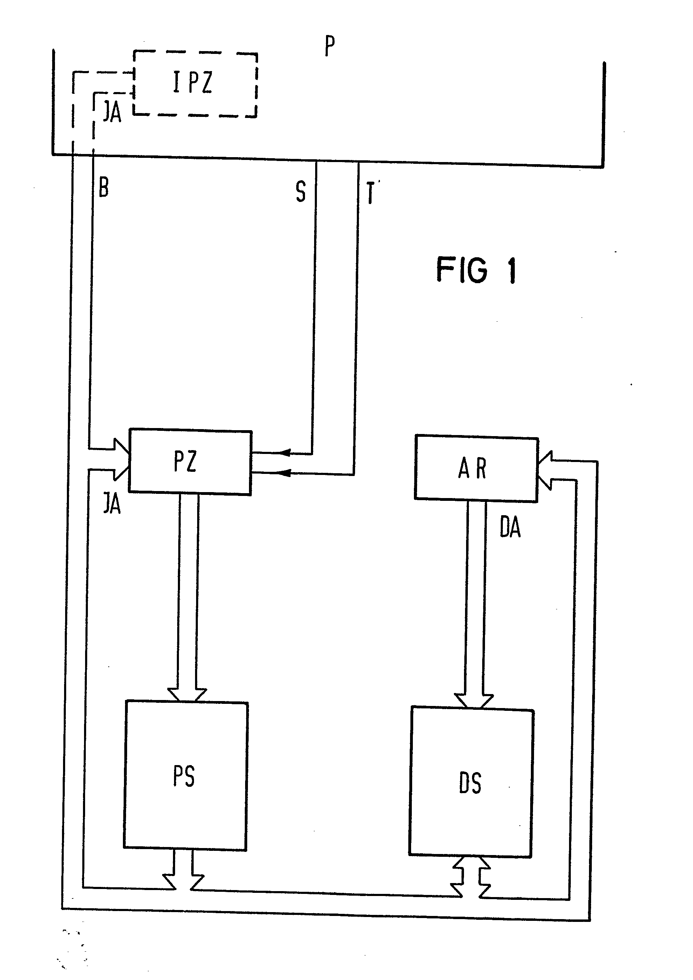

In Fig. 1 sind die zum Verständnis der Erfindung erforderlichen Schaltungsteile eines Prozessorsystems dargestellt. Im einzelnen handelt es sich dabei um einen Prozessor P mit seinem internen Programmzähler IPZ, einen Programmspeicher PS, einen Datenspeicher DS und ein Adressregister AR, die über einen Bus B verbunden sind. Zusätzlich ist ein dem Programmspeicher PS vorgeschalteter, externer Programmzähler PZ vorgesehen, dessen Eingang über den Bus B mit dem Prozessor P und dessen Ausgang mit dem Adresseingang des Programmspeichers PS verbunden ist. Außerdem ist der externe Programmzähler PZ über eine Steuerleitung S und eine Taktleitung T durch den Prozessor P steuerbar. Über die Steuerleitung S wird der externe Programmzähler PZ geladen bzw. auf 0 gesetzt. Die auf der Taktleitung T übertragenen Taktimpulse stellen sicher, daß der externe Programmzähler PZ synchron zu dem internen Programmzähler IPZ des Prozessors P zusammen arbeitet, d.h. daß beide, bezogen auf die gleiche Anfangsadresse, jeweils die gleiche Instruktionsadresse IA enthalten.

Zu Beginn eines Programmablaufs wird die im internen Programmzähler IPZ stehende Instruktionsadresse IA über den Bus B in den externen Programmzähler PZ geladen. Bei einem kontinuierlichem Vorwärtszählen des internen Programmzählers IPZ arbeitet der externe Programmzähler PZ synchron dazu. Wenn der interne Programmzähler IPZ einen Sprung ausführt, dann wird der externe Programmzähler PZ ebenfalls mit der jetzt im internen Programmzähler IPZ stehenden Instruktionsadresse IA geladen. Der interne Programmzähler IPZ und der externe Programmzähler PZ werden gemeinsam durch einen entsprechenden Rücksetzbefehl des Prozessors P auf 0 gesetzt.

Wie bei herkömmlichen Prozessorsystemen, wird bei einem Datentransfer die Datenadresse DA von einem hier nicht dargestellten Datenadresszeiger über den Bus B ausgegeben und in das Adressregister AR abgespeichert, das dem Datenspeicher DS zugeordnet ist. Anschließend wird die Datenadresse DA auf den Adresseingang des Datenspeichers DS gegeben und der dazugehörige Datentransfer ausgeführt.

Mit der erfindungsgemäßen Anordnung des externen Programmzählers PZ ist es somit möglich, bereits während der Ausführung einer Instruktion, die einen Zugriff zum Datenspeicher DS und damit auch einen Datentransfer bewirkt, vom externen Programmzähler PZ die nächste Instruktion mit der zugehörigen Instruktionsadresse IA+1 im Programmspeicher zu adressieren. Am Ende des Datentransfers kann dann ohne die sonst zusätzliche Zugriffszeit, die durch die Decodierung der Adresse im Programmspeicher PS entsteht, die nächste durch die Instruktionsadresse IA+1 adressierte Instruktion aus dem Programmspeicher PS in den Prozessor P eingelesen werden.

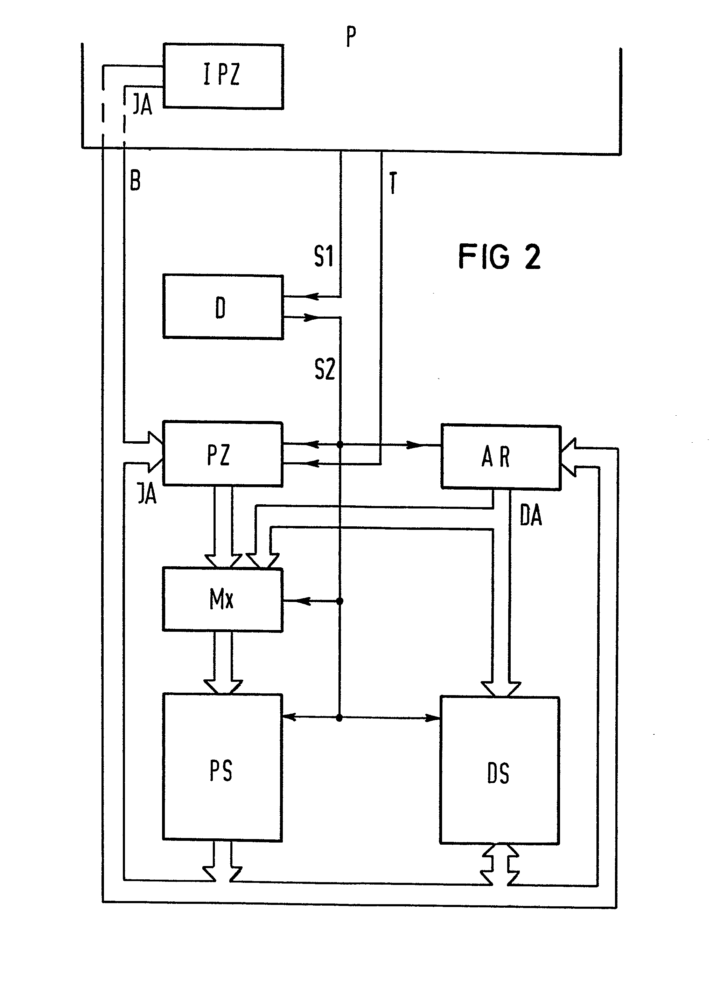

Mit der in Fig. 1 dargestellten Schaltungsanordnung können nur Instruktionen und keine Daten (Konstante) vom internen Programmzähler IPZ des Prozessors P bzw. vom externen Programmzähler Pz im Programmspeicher PS adressiert werden. Sollen auch Daten aus dem Programmspeicher PS in den Prozessor P eingelesen werden, so wird gemäß einer Ausgestaltung der Erfindung vorgeschlagen, neben den externen Programmzähler noch einen Decodierer und einen Multiplexer vorzusehen. Ein diesen Gedanken realisierendes Ausführungsbeispiel ist in Fig. 2 dargestellt.

Das in Fig. 2 dargestellte Blockschaltbild zeigt ein Prozessorsystem, mit dem Prozessor P, dem internen Programmzähler IPZ, dem Programmspeicher PS, dem Datenspeicher DS und dem Adressregister AR, die über einen Bus B verbunden sind. Zusätzlich zu dem externen Programmzähler PZ, enthält die Schaltung noch einen Decodierer D und einen Multiplexer Mx. Der Decodierer D ist sowohl über Steuerleitungen S1 mit dem Prozessor P als auch über Steuerleitungen S2 mit dem externen Programmzähler PZ, dem Multiplexer Mx, dem Programmspeicher PS, dem Datenspeicher DS und dem Adressregister AR verbunden. Der externe Programmzähler PZ ist über die Taktleitung T mit dem Prozessor P verbunden. Der eine Eingang des Multiplexers Mx ist an den Ausgang des externen Programmzählers PZ angeschaltet, und der andere Eingang ist an den Adressbus angeschaltet, der gleichzeitig den Ausgang des Adressregisters AR mit dem Adresseingang des Datenspeichers DS verbindet. Der Ausgang des Multiplexers Mx ist mit dem Adresseingang des Programmspeichers PS verbunden.

Der Decodierer D erhält über die Steuerleitungen S1 vom Prozessor P in codiereter Form ausgegebene Steuersignale, nach deren Auswertung er über die Steuerleitungen S2 die anderen Aggregate ansteuert.

Die in Fig. 2 dargestellte Schaltungsanordnung führt die gleichen Funktionen aus (wie Laden, Zählen, auf 0 setzen und Adressieren von Instruktionen im Programmspeicher PS), wie die in Fig. 1 gezeigte Schaltungsanordnung. In diesem Fall, wenn nur Instruktionen aus dem Programmspeicher PS in den Prozessor P eingelesen werden, ist im Multiplexer Mx der externe Programmzähler PZ auf den Programmspeicher PS durchgeschaltet. Sollen nun auch Daten (Konstante) im Programmspeicher PS adressiert werden, so ist im Multiplexer Mx der Ausgang des Adressregisters AR durchgeschaltet. Damit steht am Adresseingang des Programmspeichers PS die Datenadresse DA zur Verfügung, mit der die Daten im Programmspeicher PS adressiert sind.

3 Patentansprüche

2 Figuren

Patentansprüche

1. Schaltungsanordnung zur Erhöhung der Arbeitsgeschwindigkeit in einem Prozessorsystem, welches mindestens aus einem Prozessor, einem Programmspeicher, einem Datenspeicher und einem Adressregister besteht, die über eine Adress- und Datensammelleitung, den Bus, miteinander verbunden sind,
d a d u r c h   g e ke n n z e i c h n e t , daß dem Programmspeicher (PS) ein externer Programmzähler (PZ) vorgeschaltet ist, der synchron mit dem internen Programmzähler (IPZ) des Prozessors (P) zusammenarbeitet, und daß der externe Programmzähler (PZ) die Instruktionsadressen (IA) auf den Adresseingang des Programmspeichers (PS) gibt.

2. Schaltungsanordnung nach Anspruch 1,
d a d u r c h   g e k e n n z e i c h n e t , daß zwischen dem externen Programmzähler (PZ) und dem Adresseingang des Programmspeichers (PS) ein Multiplexer (Mx) vorgesehen ist, der wahlweise die Instruktionsadresse (IA) aus dem externen Programmzähler (PZ) oder die Datenadresse (DA) aus dem Adressregister (AR) auf den Adresseingang des Programmspeichers (PS) gibt.

3. Schaltungsanordnung nach Anspruch 1 und 2,
d a d u r c h   g e k e n n z e i c h n e t , daß der externe Programmzähler (PZ) ein jeweils zu Beginn einer Abarbeitung durch den Prozessor ladbarer Zählerbaustein ist, dessen Zählerstand jeweils mit dem Einlesen einer Instruktion in dem Programmspeicher (PS) bis zum Eintreffen eines Sprungbefehls oder eines Rücksetzbefehls um 1 erhöht wird.

FIG 1

2/2

0065772

FIG 2

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 020 972 (IBM) <br> * Seite 6, Zeilen 5-32; Figur 2 * | 1,3 | G 06 F 9/32 |
| | --- | | |
| A | EDN, Band 25, Nr. 20, November 1980, Seiten 110-112, Massachusetts, USA "1-Bit CMOS: MC14500" * Insgesamt * | 1 | |
| | --- | | |
| A | US-A-4 084 229 (D.R. TAYLOR et al.) * Reihe 6, Zeile 31 - Reihe 7, Zeile 26; Figur 2 * | 2 | |
| | ----- | | |

|  |
|---|
| **RECHERCHIERTE SACHGEBIETE (Int. Cl. ³)** |
| G 06 F 9/32 <br> G 06 F 9/30 <br> G 06 F 15/06 |

Der vorliegende Recherchenbericht wurde für alle Patentansprüche erstellt.

| Recherchenort <br> DEN HAAG | Abschlußdatum der Recherche <br> 28-07-1982 | Prüfer <br> DAVIES H. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82